# EUROPÄISCHE PATENTSCHRIFT

(11) **EP 3 162 617 B1**
(45) Veröffentlichungstag und Bekanntmachung des Hinweises auf die Patenterteilung: **04.07.2018**
(21) Anmeldenummer: 16193083.9
(22) Anmeldetag: 10.10.2016
(51) Int. Cl.: B60N 2/12

(54) **LÄNGSEINSTELLER FÜR EINEN FAHRZEUGSITZ, FAHRZEUGSITZ**
LENGTH ADJUSTER FOR A VEHICLE SEAT AND VEHICLE SEAT
DISPOSITIF DE RÉGLAGE LONGITUDINAL D'UN SIÈGE DE VÉHICULE, SIÈGE DE VÉHICULE

(30) Priorität: 28.10.2015 DE 102015221070
(43) Veröffentlichungstag der Anmeldung: 03.05.2017
(73) Patentinhaber: Adient Luxembourg Holding S.à r.l., 1855 Luxembourg (LU)
(72) Erfinder: UTZINGER, Karl, 66919 Weselberg (DE); WILLEMS, Boris, 66839 Schmelz (DE); JOST, Hermann, 67659 Kaiserslautern (DE); ZACHARIAS, Michael, 42799 Leichlingen (DE)
(74) Vertreter: Liedhegener, Ralf

(56) Entgegenhaltungen:
- WO-A1-03/062012
- DE-T5-112011 104 972
- JP-A- 2009 202 813

## Beschreibung

Die Erfindung betrifft einen Längseinsteller für einen Fahrzeugsitz, insbesondere Kraftfahrzeugsitz, mit den Merkmalen des Oberbegriffs des Anspruchs 1, sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 102 02 179 A1, bzw. der hieraus hervorgegangenen WO 2003/062 012 A1 ist allgemein ein gattungsgemäßer Längseinsteller für einen Fahrzeugsitz bekannt, welcher eine Memory-Vorrichtung zur Erfassung einer relativen Sitzlängsverschiebung aufweist. Die Memory-Vorrichtung ist hierbei in einem inneren, zwischen einer ersten Sitzschiene und einer zweiten Sitzschiene gebildeten, Bauraum angeordnet und mit der ersten Sitzschiene verbunden. Die Memory-Vorrichtung weist ein mit der zweiten Sitzschiene in Eingriff bringbares Sperrelement auf, welches im Falle einer Betätigung der Sperrfunktion sämtliche auf das Sperrelement wirkenden Kräfte in die Memory-Vorrichtung einleitet.

### Aufgabe

Der Erfindung liegt die Aufgabe zu Grunde, einen Längseinsteller für einen Fahrzeugsitz der eingangs genannten Art zu verbessern, insbesondere eine logische Unterscheidung zu ermöglichen, ob der Längseinsteller über einen Handgriff oder über eine Lehnenklappung betätigt wurde, sowie einen entsprechenden Fahrzeugsitz bereitzustellen.

### Lösung

Diese Aufgabe wird durch einen laut Anspruch 1 definierten Längseinsteller für einen ein Sitzteil und eine Lehne aufweisenden Fahrzeugsitz, insbesondere einen Kraftfahrzeugsitz, gelöst, welcher eine erste Sitzschiene und eine zweite Sitzschiene aufweist, wobei die erste Sitzschiene in der zweiten Sitzschiene gelagert und relativ zur zweiten Sitzschiene in einer Längsrichtung verschiebbar ist, wobei eine der ersten Sitzschiene zugeordnete und mit der zweiten Sitzschiene zusammenwirkende Memory-Vorrichtung vorgesehen ist, welche dazu eingerichtet ist, eine Sitzlängsposition des Fahrzeugsitzes zu speichern, die durch eine Längsverschiebung des Fahrzeugsitzes verlassbar und wieder einnehmbar ist, wobei die Memory-Vorrichtung eine Relativbewegung zwischen der ersten Sitzschiene und der zweiten Sitzschiene mittels eines Reibrades erfasst, welches hierzu eine relativ zur Memory-Vorrichtung bewegte Kontaktfläche kontaktiert und abfährt, wobei ein Betätigungshebel vorgesehen ist, mittels welchem eine zwischen der ersten Sitzschiene und der zweiten Sitzschiene wirkende Schienenverriegelung entriegelbar ist, wobei der Betätigungshebel mittels eines Handgriffs betätigbar ist, und der Betätigungshebel derart an eine Neigung der Lehne des Fahrzeugsitzes gekoppelt ist, dass ein Vorklappen der Lehne den Betätigungshebel betätigt, wobei der Betätigungshebel auf einen um eine Drehachse schwenkbaren Resethebel wirkt, mittels welchem das Reibrad von der Kontaktfläche abhebbar ist, um die erfasste Relativbewegung zurückzusetzen, insbesondere auch um eine Sitzlängsposition zu speichern. Unter dem Begriff "gekoppelt" im Sinne der Erfindung soll allgemein verstanden werden, dass die als miteinander gekoppelt beschriebenen Bauteile oder Zustände oder funktionalen Zusammenhänge unmittelbar oder mittelbar miteinander wirkverbunden, insbesondere kinematisch verbunden, sind, dass die Bauteile oder Funktionen einander beeinflussen. Beispielsweise wird im Falle des an die Neigung der Lehne gekoppelten Betätigungshebels, eine Schwenkbewegung oder eine Kraft zur Änderung der Neigung der Lehne unmittelbar oder mittelbar auf den Betätigungshebel übertragen, so dass dieser ebenfalls verschwenkt.

Unter einer "Schienenverriegelung" im Sinne der vorliegenden Erfindung wird allgemein verstanden, dass die Schienenverriegelung in an sich bekannter Weise dazu eingerichtet ist, eine Bewegung der ersten Sitzschiene in Längsrichtung relativ zur zweiten Sitzschiene verhindert und ferner dazu dient den Fahrzeugsitz in einer Mehrzahl unterschiedlicher Sitzlängspositionen zu arretieren.

Dadurch, dass erfindungsgemäß eine Getriebeanordnung derart an eine Neigung der Lehne gekoppelt ist, dass ein Vorklappen der Lehne die Drehachse des Resethebels derart verlagert, dass ein Abheben des Reibrades von der Kontaktfläche mittels des Resethebels verhindert ist, wenn der Betätigungshebel auf den Resethebel wirkt, kann in vorteilhafter Weise unterschieden werden, ob bei einer Längsverschiebung des Fahrzeugsitzes eine Relativbewegung der ersten Sitzschiene zur zweiten Sitzschiene längenmäßig erfasst werden soll oder nicht. So wird beispielsweise bei einer Betätigung des Längseinstellers mittels des Handgriffs die Memory-Vorrichtung außer Kraft gesetzt, da diese zum Einstellen einer neuen Sitzlängsposition nicht benötigt wird. Ergänzend wird ein Außerkraftsetzen der Memory-Vorrichtung bei einer Betätigung durch ein Vorklappen der Lehne verhindert, um zum Überführen des Fahrzeugsitzes in eine Easy-Entry-Stellung die Relativbewegung der ersten Sitzschiene zur zweiten Sitzschiene längenmäßig zu erfassen.

Ferner wird die logische Unterscheidung zwischen einer Betätigung mittels des Handgriffs und der Vorklappung der Lehne bevorzugt parallel zum entsprechenden Vorgang der Betätigung verarbeitet, bzw. umgesetzt, wodurch die Vorgänge in kürzerer Zeit durchführbar sind.

Vorteilhafte Ausgestaltungen, welche einzeln oder in Kombination miteinander eingesetzt werden können, sind Gegenstand der Unteransprüche.

Ferner kann eine Resetfeder wenigsten mittelbar auf das Reibrad wirken und das Reibrad zurücksetzen, wenn das Reibrad von der Kontaktfläche abgehoben ist. Der Längseinsteller ist insbesondere derart ausgestaltet, dass bei einem Abheben des Reibrades durch eine Betätigung des Handgriffs ein Zurücksetzten der Memory-Vorrichtung, insbesondere des Reibrades, vollständig durchgeführt ist, bevor die Betätigung mittels des Handgriffs eine Schienenverriegelung des Längseinstellers entriegelt.

Das Reibrad kann drehbar an der Reibradschwinge gelagert sein. Die Reibradschwinge selbst kann ferner ebenfalls um eine Drehachse drehbar gelagert sein, wodurch die Möglichkeit geschaffen wird, das Reibrad beim Abheben desselben mit der Reibradschwinge um die Drehachse der Reibradschwinge zu verschwenken.

Ebenso kann es vorgesehen sein, dass das Reibrad mittels eines Federelementes mit einer Anpresskraft in Richtung der Kontaktfläche beaufschlagt ist. Das Federelement kann hierzu mittelbar oder unmittelbar auf das Reibrad wirken.

Ferner kann die Anpresskraft in vorteilhafter Weise während der Relativbewegung zwischen der ersten Sitzschiene und der zweiten Sitzschiene, erhöht sein, verglichen zu einer Anpresskraft in einem Zustand ohne Relativbewegung. Wird die Anpresskraft während der Relativbewegung zur genaueren Erfassung derselben erhöht, ist sichergestellt, dass das Reibrad nicht über die abgefahrene Kontaktfläche rutscht und die erfasste Relativbewegung hierdurch verfälscht.

Ferner kann die Memory-Vorrichtung bei einem Wiedereinnehmen der gespeicherten Sitzlängsposition wenigstens einen Sperrriegel betätigen, welcher in einer Blockierstellung ein Verschieben der ersten Sitzschiene relativ zur zweiten Sitzschiene über die gespeicherte Sitzlängsposition hinaus verhindert.

Der Sperrriegel kann ferner weitestgehend in, insbesondere parallel zu, einer Vertikalrichtung beweglich geführt sein, wodurch dieser sich in vorteilhafter Weise kompakt und platzsparend ausgestalten lässt.

Wenn es vorgesehen ist, dass der Sperrriegel in der Blockierstellung in eine Öffnung der zweiten Sitzschiene eingreift, kann in vorteilhafter Weise eine Verriegelung mit wenigen zusätzlichen Bauteilen bereitgestellt werden.

Der Sperrriegel kann insbesondere innerhalb eines Riegelgehäuses geführt sein, wobei das Riegelgehäuse mittels eines Adapterblechs mit der ersten Sitzschiene verbunden ist.

Ferner wird die Aufgabe mit einem Fahrzeugsitz, insbesondere einem Kraftfahrzeugsitz, gelöst, welcher ein Sitzteil, eine Lehne und einen mit dem Sitzteil verbundenen erfindungsgemäßen Längseinsteller gemäß der vorhergehenden Beschreibung umfasst.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Ansicht eines erfindungsgemäßen Fahrzeugsitzes in einem Grundzustand,
- Fig. 2:: eine schematische Seitenansicht eines erfindungsgemäßen Längseinstellers in einem Grundzustand,
- Fig. 3:: eine schematische Seitenansicht des Längseinstellers in einem einer aufgerichteten Lehne entsprechenden Zustand und angehobenem Betätigungshebel,
- Fig. 3a:: ein vergrößerter Ausschnitt von Fig. 3 mit teildurchsichtigen Elementen,
- Fig. 4:: eine schematische Seitenansicht des Längseinstellers in einem einer vorgeklappten Lehne entsprechenden Zustand,
- Fig. 4a:: ein vergrößerter Ausschnitt von Fig. 4 mit teildurchsichtigen Elementen,
- Fig. 5:: eine schematische Seitenansicht eines Getriebes des Längseinstellers in der Grundstellung,
- Fig. 6:: eine ausschnittsweise perspektivische Ansicht von oben auf das Getriebe des Längseinstellers,
- Fig. 7:: eine Explosionsdarstellung des Getriebes des Längseinstellers,
- Fig. 8:: eine schematische Ansicht eines Querschnitts des Längseinstellers entlang der Linie VIII-VIII von Fig. 9,
- Fig. 9: eine schematische Ansicht eines Längsschnitts des Längseinstellers entlang der Linie IX-IX von Fig. 8,
- Fig. 10:: eine perspektivische Ansicht von unten auf den gemäß dem Längsschnitt geöffneten Längseinsteller,
- Fig. 11a:: eine schematische Seitenansicht des Getriebes des Längseinstellers in einem Zustand mit teilweise angehobenem Reibrad,
- Fig. 11b:: eine schematische Seitenansicht des Getriebes des Längseinstellers in einem Zustand mit vollständig angehobenem Reibrad,
- Fig. 12a:: eine schematische Seitenansicht des Getriebes des Längseinstellers in einem Zustand mit vorgeklappter Lehne,
- Fig. 12b:: eine schematische Seitenansicht des Getriebes des Längseinstellers in einem Zustand im unmittelbaren Bereich einer Memory-Position,
- Fig. 12c:: eine schematische Seitenansicht des Getriebes des Längseinstellers in einem Zustand bei weiter in Längsrichtung verschobenem Fahrzeugsitz,
- Fig. 13a:: eine schematische Seitenansicht des Getriebes des Längseinstellers in einem Zustand mit aufgerichteter Lehne,
- Fig. 13b:: eine schematische Seitenansicht des Getriebes des Längseinstellers in einem Zustand mit teilweise angehobenem Reibrad,
- Fig. 13c:: eine schematische Seitenansicht des Getriebes des Längseinstellers in einem Zustand mit weiter angehobenem Reibrad,
- Fig. 13d:: eine schematische Seitenansicht des Getriebes des Längseinstellers in einem Zustand mit vollständig angehobenem Reibrad,

Die Zeichnungen werden nachfolgend unter Verwendung von drei senkrecht zueinander verlaufenden Raumrichtungen beschrieben. Eine Längsrichtung x verläuft bei einem im Fahrzeug eingebauten Fahrzeugsitz 200 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 200 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 200 sitzenden Insassen in normaler Sitzposition, wobei der Fahrzeugsitz 200 im Fahrzeug eingebaut, in einer zur Personenbeförderung geeigneten Gebrauchsposition mit aufrecht stehender Lehne 204 und wie üblich in Fahrtrichtung ausgerichtet ist. Der Fahrzeugsitz 200 kann jedoch auch in abweichender Ausrichtung, beispielsweise quer zur Fahrtrichtung verbaut werden.

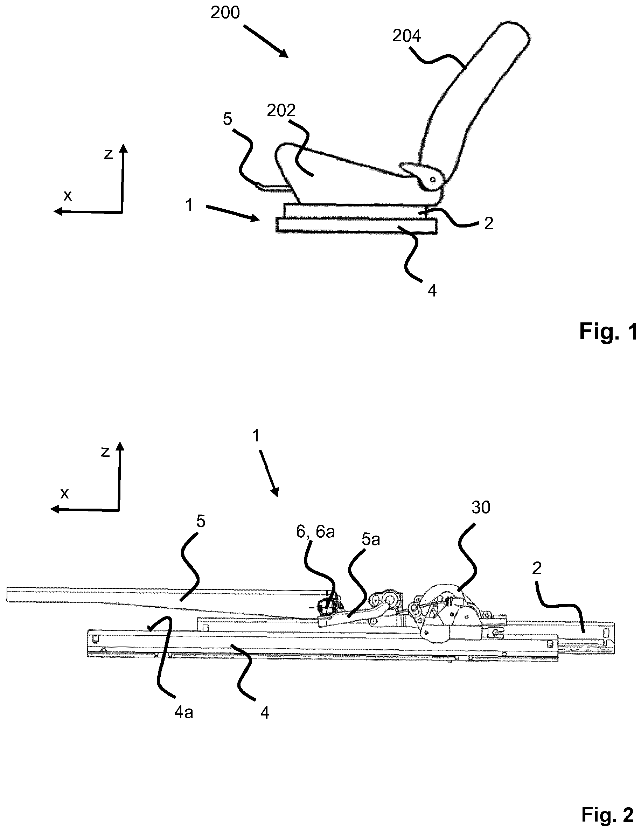

Der Fahrzeugsitz 200 ist in Fig. 1 in einer Gebrauchsstellung gezeigt, in welcher die Lehne 204 aufgerichtet ist. Der Fahrzeugsitz 200 ist auf einem Längseinsteller 1 montiert, wobei insbesondere ein Sitzteil 202 des Fahrzeugsitzes 200 mit dem Längseinsteller 1 verbunden ist. Der Längseinsteller 1 weist eine erste Sitzschiene 2, insbesondere eine Oberschiene 2, und eine zweite Sitzschiene 4, insbesondere eine Unterschiene 4, auf, relativ zu welcher die erste Sitzschiene 2 in Längsrichtung verschiebbar ist. Die Zuweisung der ersten Sitzschiene 2 und der zweiten Sitzschiene 4 jeweils zu der Oberschiene 2 oder der Unterschiene 4 ist lediglich beispielhaft und kann in alternativen Ausführungsformen variieren. Zur leichteren Erklärung der nachfolgenden Zeichnungen, werden nachfolgend die beschreibenderen Begriffe Oberschiene 2 und Unterschiene 4 verwendet.

Die Oberschiene 2 und die Unterschiene 4 bilden ein Schienenpaar. Vorzugsweise weist der Längseinsteller 1 zwei Schienenpaare auf, welche im Wesentlichen zu einer Mittelebene des Fahrzeugsitzes 200, die senkrecht zur Querrichtung y verläuft, symmetrisch angeordnet sind. Der Fahrzeugsitz 200 ist hierbei mit der Oberschiene 2 fest verbunden. Die Unterschiene 4 ist üblicherweise mit einem nicht dargestellten Fahrzeugboden und/oder einer Fahrzeugstruktur verbunden. Der Fahrzeugsitz 200 ist zusammen mit der sitzfesten Oberschiene 2 relativ zu der strukturfesten Unterschiene 4 parallel zur Längsrichtung x verschiebbar.

Fig. 2 zeigt den Längseinsteller 1 in einem Grundzustand. Der Grundzustand des gezeigten Längseinstellers 1 beschreibt jenen Zustand, wenn der Fahrzeugsitz 200 eine von dem Insassen voreingestellte Sitzlängsposition eingenommen hat und die Lehne 204 des Fahrzeugsitzes 200 aufgerichtet ist, und der Fahrzeugsitz 200 sich demnach in einer zur Personenbeförderung geeigneten Gebrauchsstellung befindet. Unter dem Begriff "Grundzustand" des Fahrzeugsitzes 200 oder des Längseinsteller 1 ist allgemein zu verstehen, dass der Grundzustand der entsprechend referenzierten Komponenten - sofern nicht explizit anderes definiert - stets einem Zustand entspricht, wenn sich der Fahrzeugsitz 200 in einer Gebrauchsstellung befindet und sich die Memory-Vorrichtung, insbesondere ein Getriebe 80 der Memory-Vorrichtung, in einem der Memory-Position entsprechenden Zustand befindet. Wird hierbei lediglich auf ein einzelnes Bauteil Bezug genommen, kann ebenfalls von einer Grundstellung gesprochen sein. Die Memory-Position entspricht hierbei einer zuvor eingestellten und gespeicherten Sitzlängsposition, welche durch ein Längsverschieben des Fahrzeugsitzes 200 verlassen und anschließend wieder eingenommen werden kann.

Die Memory-Vorrichtung wird anhand nachfolgender Zeichnungen eingehender beschrieben. Die Memory-Vorrichtung erfasst eine aus einer Längsverschiebung des Fahrzeugsitzes resultierende Relativbewegung zwischen der Oberschiene 2 und der Unterschiene 4 mittels eines Reibrades 18 und eines Getriebes 80. Eine zwischen der Oberschiene 2 und der Unterschiene 4 wirkende Schienenverriegelung ist mittels eines Betätigungshebels 5a entriegelbar, wobei ein Vorklappen der Lehne 204 des Fahrzeugsitzes 200 wenigstens mittelbar auf den Betätigungshebel 5a wirkt, um die Schienenverriegelung zu entriegeln.

Eine von dem Längseinsteller 1 grundsätzlich bereitgestellte Funktion zum Einstellen der Sitzlängsposition des Fahrzeugsitzes 200 ist mittels eines Handgriffs 5, welcher wie dargestellt an einer Übertragungsstange 6 angeordnet ist, betätigbar. Ferner ist der Betätigungshebel 5a an der Übertragungsstange 6 angeordnet, welcher dazu eingerichtet ist, auf eine nicht dargestellte Schienenverriegelung des Schienenpaares, insbesondere beider Schienenpaare, des Längseinstellers 1 zu wirken, um dieses zu entriegeln und den Fahrzeugsitz 200 entsprechend parallel zur Längsrichtung x verfahren und/oder verschieben zu können. Der Betätigungshebel 5a ist beispielsweise mittels einer Schweißverbindung mit der Übertragungsstange 6 verbunden und mit dieser zusammen über eine gemeinsame Drehachse 6a drehbar an der Oberschiene 2 gelagert. Der Betätigungshebel 5a kann ferner einteilig mit dem Handgriff 5 ausgebildet sein. Die Übertragungsstange 6 dient der gleichzeitigen Betätigung und Entriegelung einer Schienenverriegelung eines gleichfalls aus Oberschiene 2 und Unterschiene 4 bestehenden Sitzschienenpaares eines weiteren Längseinstellers 1, welches an einer gegenüberliegenden Seite des Fahrzeugsitzes 200 vorgesehen sein kann.

Ferner ist die Memory-Vorrichtung eingerichtet, einer Easy-Entry-Funktion zu dienen und beim Betätigen derselben mittels des Getriebes 80 eine Längsverschiebung, bzw. eine Relativbewegung der Oberschiene 2 relativ zur Unterschiene 4 längenmäßig zu erfassen und im Falle eines wiederholten Einnehmens der Memory-Position eine weitere Längsverschiebung zu blockieren, insbesondere mittels eines Sperrriegels 90, 91 zu blockieren. Um das Getriebe 80 vor Verschmutzung oder sonstiger nachteiliger Funktionsbeeinflussung zu schützen, ist das Getriebe 80 bevorzugt mit einem Getriebegehäuse 30 verdeckt, welches in Fig. 2 dargestellt ist. Die Memory-Position entspricht hierbei der - gegebenenfalls auch als solche bezeichneten - "gespeicherten Sitzlängsposition" und ist nachfolgend als synonym verwendet.

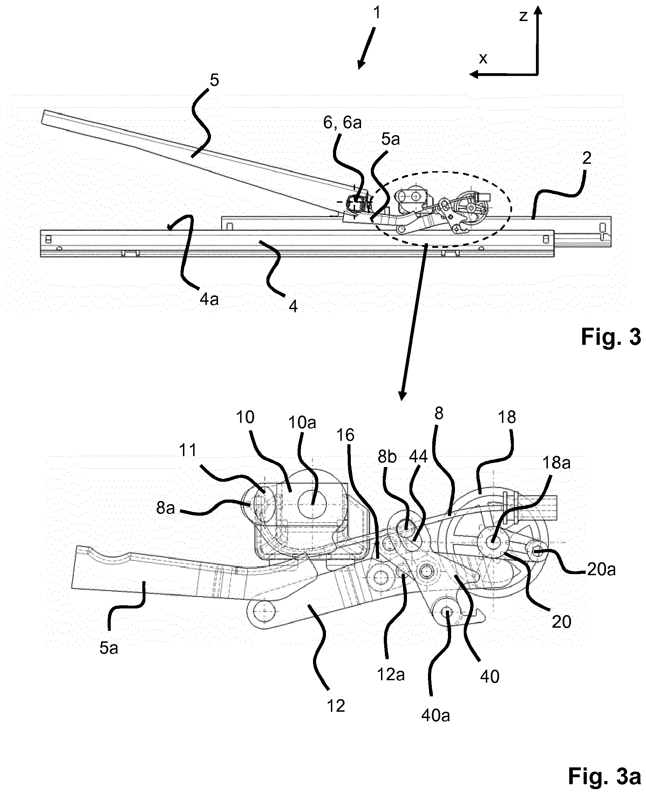

In Fig. 3 ist der Längseinsteller 1 in einem Zustand dargestellt, welcher durch ein Anheben des Handgriffs 5 durch den Insassen herbeigeführt werden kann, ohne dass die Lehne 204 des Fahrzeugsitzes 200 vorgeklappt ist. Fig. 3a zeigt einen vergrößerten Ausschnitt von Fig. 3 mit teildurchsichtigen Elementen. Dieser Zustand wird beispielsweise eingenommen, wenn der Insasse den Fahrzeugsitz 200 von der aktuellen Sitzlängsposition in eine abweichende, geänderte Sitzlängsposition verstellen möchte. Die geänderte Sitzlängsposition entspricht dann einer neuen gespeicherten Sitzlängsposition.

Bei einem Anheben des Handgriffs 5 durch den Insassen erfolgt eine Entriegelung des Längseinstellers 1, insbesondere ein Entriegeln oder Öffnen der Schienenverriegelung, wodurch die Oberschiene 2 für eine Relativbewegung zur Unterschiene 4 freigegeben wird. Hierbei verschwenkt der Betätigungshebel 5a um die Drehachse 6a der Übertragungsstange 6 und betätigt hierbei einen Resethebel 12, welcher um eine Drehachse 12a des Resethebels 12 drehbar gelagert ist. Der Resethebel 12 wird bei einer Betätigung durch den Betätigungshebel 5a um die Drehachse 12a gedreht und hebt mit einem dem Betätigungshebel 5a gegenüberliegenden Ende ein auf einer Reibradschwinge 20 gelagertes Reibrad 18 von einer Kontaktfläche 4a der Unterschiene 4 ab. Das Reibrad 18 ist um eine Drehachse 18a des Reibrades 18 auf der Reibradschwinge 20 gelagert, wobei die Reibradschwinge 20 um eine Drehachse 20a der Reibradschwinge 20 verschwenkbar ist. Durch das Abheben des Reibrades 18 von der Kontaktfläche 4a wird das Reibrad 18, bzw. eine von der Memory-Vorrichtung gespeicherte Sitzlängsposition oder eine erfasste Relativbewegung, auf einen Nullwert oder definierten Ausgangswert zurückgesetzt. Die Memory-Vorrichtung weist hierzu eine in den Figuren nicht dargestellte auf das Reibrad 18, bzw. bevorzugt auf das Getriebe 80 wirkende Rückstellfeder auf.

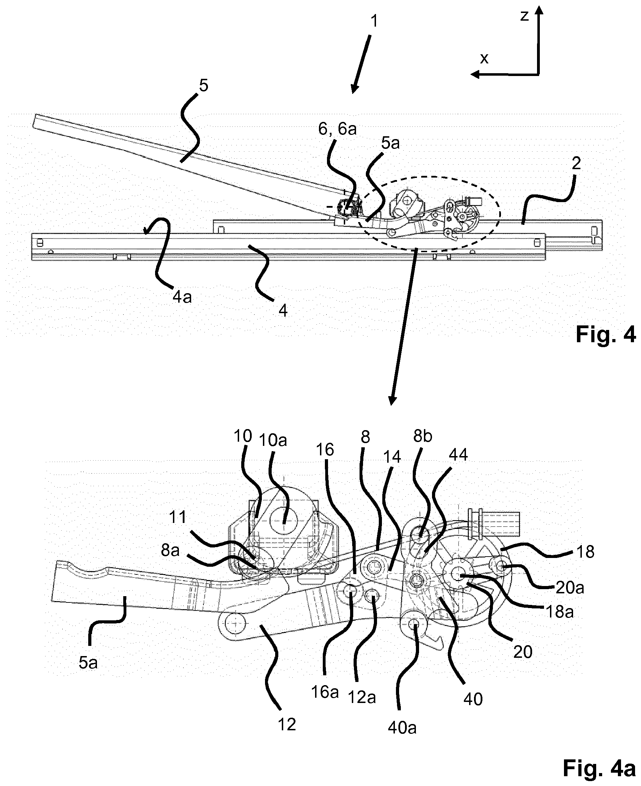

In Fig. 4 ist der Längseinsteller 1 in einem Zustand dargestellt, welcher durch ein Vorklappen der Lehne 204 des Fahrzeugsitzes 200 herbeigeführt werden kann. Fig. 4a zeigt einen vergrößerten Ausschnitt von Fig. 4 mit teildurchsichtigen Elementen. Die Lehne 204 ist mittels eines Bowdenzuges 8 mit dem Längseinsteller 1 wirkverbunden. Der dargestellte Zustand wird beispielsweise eingenommen, wenn der Fahrzeugsitz 200 in eine sogenannte Easy-Entry-Stellung überführt wird. Eine Überführung des Fahrzeugsitzes 200 in die Easy-Entry-Stellung dient bekanntermaßen der Schaffung von ausreichend Platz zum leichteren Einsteigen in eine hintere Sitzreihe eines Kraftfahrzeuges.

Der Bowdenzug 8 weist ein Bowdenzugende 8a auf, welches an einer Seilrolle 10 gehalten ist. Die Seilrolle 10 ist um eine Drehachse 10a der Seilrolle 10 drehbar gelagert. Die Seilrolle 10 weist einen Hebelarm 11 auf, welcher bei einer Drehung der Seilrolle 10 derart auf den Betätigungshebel 5a wirkt, dass der Betätigungshebel 5a um die Drehachse 6a der Übertragungsstange 6 verschwenkt wird und hierdurch die Schienenverriegelung des Längseinstellers 1 entriegelt wird.

Der Bowdenzug 8 weist ferner einen zum Bowdenzugende 8a beabstandeten Bowdenzugnippel 8b auf, welche in einem Langloch 44 eines Steuerhebels 40 geführt ist. Der Steuerhebel 40 ist um eine Drehachse 40a drehbar gelagert und mittels einer Getriebeanordnung verbunden. Die Getriebeanordnung weist vorliegend eine Koppel 14 und ein Achsträgerelement 16 auf. Die Koppel 14 verbindet das Achsträgerelement 16 mit dem Steuerhebel 40. Das Achsträgerelement 16 ist um eine Drehachse 16a drehbar gelagert und stellt ferner eine Lagerung des Resethebels 12 um die Drehachse 12a bereit.

Wird nun die Lehne 204 des Fahrzeugsitzes 200 ausgehend von der Gebrauchsstellung vorgeklappt, um den Fahrzeugsitz 200 in die Easy-Entry-Stellung zu überführen, bewegt der Bowdenzug 8 mittels des Bowdenzugnippels 8b den Steuerhebel 40 um die Drehachse 40a des Steuerhebels 40 und zeitgleich die Seilrolle 10 um die Drehachse 10a der Seilrolle 10. Hieraus resultierend verursacht die Schwenkbewegung des Steuerhebels 40 mittels der Koppel 14 ein Verschwenken des Achsträgerelements 16 um die Drehachse 16a des Achsträgerelements 16, wodurch sich ebenfalls die Drehachse 12a des Resethebels 12 um die Drehachse 16a des Achsträgerelements 16 bewegt. Die Drehachse 12a des Resethebels 12 wird hierbei derart verlagert, dass der Resethebel 12, welcher zeitgleich durch den über den Hebelarm 11 an der Seilrolle 10 betätigten Betätigungshebel 5a verschwenkt wird, mit seinem dem Betätigungshebel 5a gegenüber liegenden Ende das Reibrad 18 nicht von der Unterschiene 4 abheben kann. Anders ausgedrückt, wird, bei einer Entriegelung des Längseinstellers 1 durch ein Vorklappen der Lehne 204, der Resethebel 12 mittels des Betätigungshebels 5a betätigt und zeitgleich durch den Steuerhebel 40 außer Wirkverbindung mit dem Reibrad 18 gebracht.

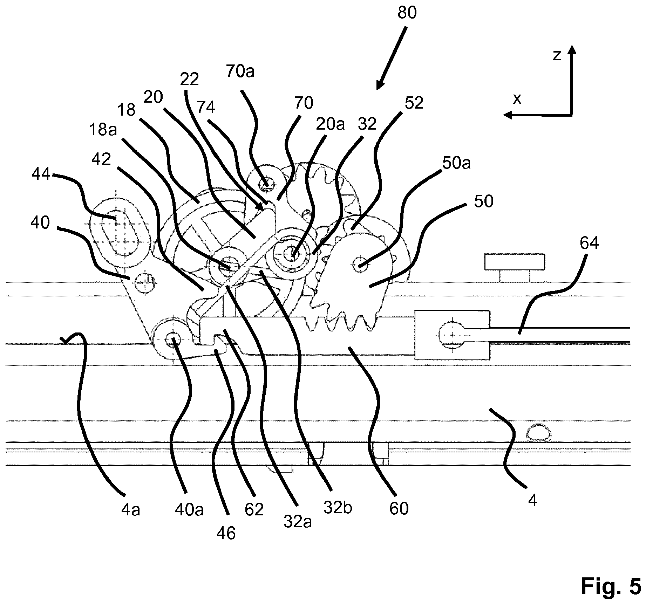

In Fig. 5 ist das Getriebe 80 des Längseinstellers 1 in einer Seitenansicht dargestellt. Die gezeigte Stellung der gezeigten Bauteile des Getriebes 80 des Längseinstellers 1 entspricht einem Grundzustand des Getriebes 80. Das Getriebe 80 ist bevorzugt ortsfest zur Oberschiene 2 angeordnet. Das Reibrad 18 kontaktiert die Kontaktfläche 4a der Unterschiene 4. Der Steuerhebel 40 weist eine Nase 42 auf, an welcher sich ein erstes Federende 32a einer Schenkelfeder 32 abstützt. Die Schenkelfeder 32 ist an einem die Drehachse 20a umschließenden Abschnitt der Reibradschwinge 20 angeordnet und ebenfalls um die Drehachse 20a der Reibradschwinge 20 gelagert, insbesondere um die Drehachse 20a herumgeführt. Ein zweites Federende 32b der Schenkelfeder 32 stützt sich an einem weiteren Abschnitt der Reibradschwinge 20 im Bereich der Drehachse 18a des Reibrades 18 ab. Hierbei erzeugt die Schenkelfeder 32 eine Anpresskraft, mit welcher das Reibrad 18 auf die Kontaktfläche 4a der Unterschiene 4 gedrückt wird. In der Grundstellung ist die Anpresskraft bevorzugt derart dimensioniert, dass es vermieden wird, dass das Reibrad 18, aufgrund einer Vibration des Kraftfahrzeuges selbst oder aufgrund von Fahrbahnunebenheiten, anfängt zu klappern oder von der Kontaktfläche 4a abzuheben.

Der Steuerhebel 40 steht ferner mit einer ebenfalls um die Drehachse 40a gelagerten Klinke 46 in Verbindung, welcher mit einem Haken 62 einer Zahnstange 60 in Eingriff ist. Die Klinke 46 ist hierzu im Wesentlichen freilaufend und lediglich in einer Bewegungsrichtung auf Mitnahme mit dem Steuerhebel 40 gekoppelt. Die Zahnstange 60 ist mit einem weiteren Bowdenzug 64 verbunden, welcher auf eine nicht dargestellte Verriegelungsvorrichtung eines die Lehne 204 mit dem Sitzteil 202 des Fahrzeugsitzes 200 verbindenden Rastbeschlages wirken kann, um die Lehne 204 in einer vorgeklappten Stellung zu verriegeln und erst wieder freizugeben, wenn der Längseinsteller 1 wieder die gespeicherte Sitzlängsposition eingenommen hat. Dies kann als Easy-Entry-Komfort-Funktion bezeichnet werden. Unter einer "Easy-Entry-Komfort-Funktion" im Sinne der Erfindung soll allgemein verstanden werden, dass eine zur Überführung eines Fahrzeugsitzes in eine Easy-Entry-Stellung vorgeklappte Lehne des Fahrzeugsitzes in der vorgeklappten Stellung arretierbar ist, so dass ein Aufrichten der Lehne außerhalb einer Memory-Position, ohne eine explizite manuelle Aufhebung der Arretierung, verhindert ist. Die Zahnstange 60 weist abschnittsweise eine Verzahnung auf, welche mit einem Zahnsegment 50, welches um eine Drehachse 50a drehbar gelagert ist, in Eingriff steht. Das Zahnsegment 50 weist ferner einen aus einer Umfangsfläche des Zahnsegments 50 vorstehenden Nocken 52 auf.

Darüber hinaus ist ein Rückstellhebel 70 vorgesehen, welcher um eine Drehachse 70a drehbar gelagert ist. Der Rückstellhebel 70 weist ein Nocken 72 auf, welcher bei einem Verschwenken des Rückstellhebels 70 mit dem Nocken 52 des Zahnsegments 50 in Wirkverbindung bringbar ist. Der Rückstellhebel 70 weist ferner ein Langloch 74 auf, in welchem eine Nase 22 der Reibradschwinge 20 aufgenommen ist.

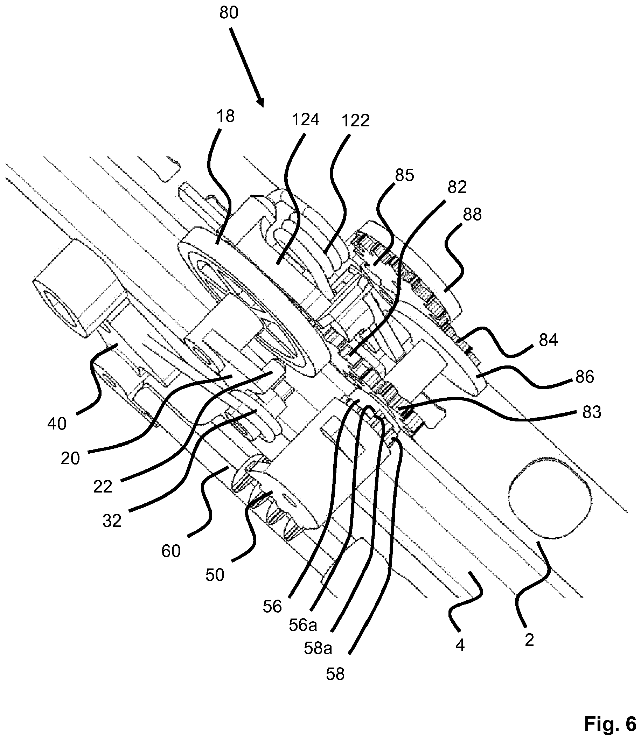

In Fig. 6 ist das Getriebe 80 des Längseinstellers 1 in einer perspektivischen Ansicht von oben dargestellt. Hierbei ist erkennbar, dass das Zahnsegment 50 in Wirkverbindung mit dem Getriebe 80 der Memory-Vorrichtung steht.

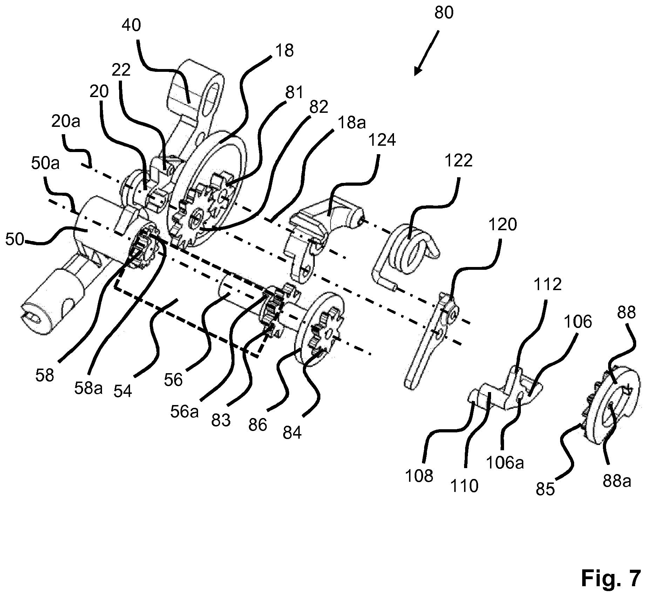

In Fig. 7 ist eine Explosionsdarstellung des Getriebes 80 des Längseinstellers 1 gezeigt. Hierbei ist im Detail erkennbar, dass das Getriebe 80 ein erstes Zahnrad 81 umfasst, welches ebenfalls um die Drehachse 18a des Reibrades 18 drehbar gelagert und mit dem Reibrad 18 rotationsfest gekoppelt ist. Das erste Zahnrad 81 treibt ein zweites Zahnrad 82 an, welches fluchtend mit der Drehachse 20a der Reibradschwinge 20 drehbar gelagert ist. Das zweite Zahnrad 82 treibt ein drittes Zahnrad 83 an, welches um die Drehachse 50a des Zahnsegments 50 drehbar angeordnet ist. Mit dem dritten Zahnrad 83 drehfest verbunden und ebenfalls um die Drehachse 50a drehbar gelagert ist eine erste Konturscheibe 86, sowie ein viertes Zahnrad 84. Das vierte Zahnrad 84 treibt ein fünftes Zahnrad 85 an, welches mit einer zweiten Konturscheibe 88 drehfest verbunden ist und um eine Drehachse drehbar gelagert ist. Das Zahnsegment 50 ist vorliegend mittels einer Spindel-Mutter-Anordnung 54 mit dem Getriebe 80, insbesondere mit dem dritten Zahnrad 83 des Getriebes 80 verbunden.

Weiter ist eine ebenfalls um die Drehachse 20a verschwenkbare Zusatzschwinge 124 vorgesehen, welche eine der Reibradschwinge 20 gegenüberliegende Lagerstelle für das Reibrad 18 und das erste Zahnrad 81 bereitstellt. Die Zusatzschwinge 124 ist somit an eine Stellung und Bewegung der Reibradschwinge 20 um die Drehachse 20a gekoppelt. Die Zusatzschwinge 124 stellt ferner einen ersten Abstützpunkt für ein erstes Ende einer Entsperrfeder 122 bereit, welche vorliegend als Schenkelfeder ausgestaltet ist. Die Entsperrfeder 122 greift mit einem zweiten Ende an einem zweiten Abstützpunkt an einem Entsperrhebel 120 an, welcher um die Drehachse 20a drehbar gelagert ist. Bei einem Verschwenken der Zusatzschwinge 124, beispielsweise durch ein Anheben des Reibrades 18 mittels des Resethebels 12, wirkt der Entsperrhebel 120 bei einer durch die Entsperrfeder 122 eingeleiteten Bewegung um die Drehachse 20a auf einen Abschnitt 108 eines Entriegelungshebels 106. Der Entriegelungshebel 106 ist um eine Drehachse 106a drehbar gelagert und dazu eingerichtet, auf einen oder mehrere Sperrriegel 90, 91 zu wirken, um die Sperrriegel 90, 91 in eine entriegelte Stellung zu bewegen und in dieser zu halten. Ferner weist der Entriegelungshebel 106 einen ersten Nocken 110 und einen zweiten Nocken 112 auf, welche jeweils mit einer der Ausnehmungen der ersten Konturscheibe 86 oder der zweiten Konturscheibe 88 zusammenwirken.

Anhand der Figuren 6 und 7 werden nachfolgend der Aufbau und die allgemeine Funktionsweise des Getriebes 80 und einer auf diesem basierenden beispielhaften Memory-Vorrichtung beschrieben. Hierbei ist das Reibrad 18 gezeigt, welches zur Erfassung einer Längsverschiebung der an der Oberschiene 2 angeordneten Memory-Vorrichtung relativ zur Kontaktfläche 4a der Unterschiene 4 bewegt wird. Alternativ kann das Reibrad 18 auch durch ein Zahnrad in Verbindung mit einer an der Kontaktfläche 4a angeordneten Zahnstange, bzw. einer Gegenverzahnung ersetzt werden.

Eine Rotationsbewegung des Reibrades 18 entspricht demnach der Längsverschiebung. Das Reibrad 18 ist zusammen mit dem ersten Zahnrad 81 drehfest zueinander auf der gemeinsamen Drehachse 18a angeordnet. Das erste Zahnrad 81 steht in Eingriff mit dem zweiten Zahnrad 82, welches wiederum das dritte Zahnrad 83 antreibt. Das dritte Zahnrad 83 ist zusammen mit dem vierten Zahnrad 84 drehfest zueinander um eine gemeinsame Drehachse 50a angeordnet. Ferner dient die Drehachse 50a zu Lagerung einer ersten Konturscheibe 86. Das vierte Zahnrad 84 steht in Eingriff mit dem fünften Zahnrad 85, welches zusammen mit einer zweiten Konturscheibe 88 um eine nicht dargestellte Drehachse gelagert ist, welche bevorzugt von dem Getriebegehäuse 30 bereitgestellt sein kann. Die Drehachse 20a und die Drehachse 50a sind bevorzugt ebenfalls in vorgesehenen Lagerungen des Getriebegehäuses 30 gelagert.

Die Radien der Zahnräder 81 bis 85 sind derart gewählt, dass eine stufenweise Untersetzung der Rotationsbewegung des Reibrades 18 erfolgt, so dass eine Drehung von mehr als 360° des fünften Zahnrades 85, welches allgemein dem letzten Zahnrad entspricht, vorgesehen ist, wobei hierbei die Drehung der Konturscheiben 86, 88 relativ zueinander abgestimmt sind, so dass eine gemeinsame Ausrichtung der Konturscheiben 86, 88 entsprechend einem Drehwinkel von 0° ausschließlich in der Memory-Position gewährleistet ist. Es sind jedoch ebenso weitere, auf einem Getriebe 80 basierende, Memory-Vorrichtungen denkbar, deren Zahnräder 81 bis 85 derart angepasst sind, dass eine stufenweise Untersetzung der Rotationsbewegung des Reibrades 18 erfolgt, so dass entsprechend einer maximal möglichen Längsverschiebung das fünfte Zahnrad 85 maximal eine volle Umdrehung, bevorzugt etwas weniger als eine volle Umdrehung, ausführt. Vorliegend weist das erste Zahnrad 81 einen kleineren Radius als das die Längsverschiebung aufnehmende Reibrad 18 auf. Das erste Zahnrad 81 weist ferner einen kleineren Radius als das zweite Zahnrad 82 auf. Das zweite Zahnrad 82 weist ferner einen größeren Radius als das dritte Zahnrad 83 auf. Das dritte Zahnrad 83 weist einen annähernd gleichen Radius wie das vierte Zahnrad 84 auf. Das vierte Zahnrad 84 weist einen kleineren Radius als das fünfte Zahnrad 85 auf.

Ferner ist zur Bereitstellung einer sogenannten Reset-Funktion, mittels welcher das Getriebe 80 wieder in den Grundzustand bringbar ist, eine nicht dargestellte Resetfeder vorgesehen. Die Resetfeder greift hierzu beispielsweise an einem der Zahnräder 81 bis 85 an und dreht das Getriebe 80 sowie die mit dem Getriebe 80 verbundenen Konturscheiben 86, 88 in die Grundstellung zurück, welche das Getriebe 80 und die Konturscheiben 86, 88 in der gespeicherten Sitzlängsposition aufweisen. Die Resetfeder kann beispielsweise in Form einer Spiralfeder ausgestaltet sein. Die Resetfeder stützt sich bevorzugt zwischen einem Zahnrad 81 bis 85 oder einem mit einem der Zahnräder 81 bis 85 drehfest verbundenen Bauteil und an einem gehäusefesten Abschnitt ab. Die Resetfeder wird bevorzugt bei einem Verschieben der Oberschiene 2 von der Drehung des entsprechenden Zahnrades 81 bis 85 vorgespannt. Wenn anschließend das Getriebe 80 durch Anheben des Reibrades 18 mittels der Resethebels 12 außer Kontakt mit der Kontaktfläche 4a gebracht wird, bewirkt ein Entspannen der vorgespannten Resetfeder ein Rückstellen des Getriebes 80, anders ausgedrückt bewirkt es einen Reset des Getriebes 80.

In Bezug auf die Figuren 6 und 7 wird nachfolgend die Funktion der Spindel-Mutter-Anordnung 54 eingehender beschrieben. Die Spindel-Mutter-Anordnung 54 ist um die Drehachse 50a drehbar angeordnet. Die Spindel -Mutter-Anordnung 54 umfasst eine in dem Zahnsegment 50 axial verschieblich gelagerte Mutter 58, welche an ihrer dem Zahnsegment 50 abgewandten Stirnseite einen Anschlag 58a aufweist. Ferner umfass die Spindel-Mutter-Anordnung 54 eine ein Außengewinde aufweisende Spindel 56, welche in ein Innengewinde der Mutter 58 einschraubbar ist. Die Spindel 56 weist einen Mitnehmer 56a auf, welcher bei entsprechender Einschraubtiefe der Mutter 58 mit dem Anschlag 58a in Eingriff bringbar ist. Die Spindel 56 steht stirnseitig mit dem dritten Zahnrad 83 des Getriebes 80 in Verbindung, so dass eine der Längsverschiebung der Oberschiene 2 entsprechende Rotationsbewegung übertragen wird.

Die Mutter 58 ist über ein Innengewinde mit dem Außengewinde der Spindel 56 in Eingriff. Ferner weist die Mutter 58 auf der Außenseite eine koaxial zur Drehachse 50a orientierte Außenverzahnung auf. Diese Außenverzahnung der Mutter 58 ist in einer entsprechend ebenfalls koaxial zur Drehachse 50a orientierten Innenverzahnung eines Abschnitts eines Zahnsegments 50 in entsprechend dieser koaxialen Richtung geführt.

Die Mutter 58 ist durch die Verbindung ihrer Außenverzahnung mit der Innenverzahnung des Abschnitts des Zahnsegments 50 in einer Rotation relativ zum Zahnsegment 50 gehemmt und lediglich axial verschieblich in dem Zahnsegment 50 geführt. Bei einer Längsverschiebung der Oberschiene 2 relativ zur Unterschiene 4 von der Memory-Position weg, dreht sich die Spindel 56 um die Drehachse 50a, so dass der Mitnehmer 56a von dem Anschlag 58a der Mutter 58 weg gedreht wird. Da hierbei die Zahnstange 60 von dem Steuerhebel 40 freigegeben ist, folgt der Anschlag 58a der Mutter 58, aufgrund einer Kraftbeaufschlagung durch den Bowdenzug 64 auf das Zahnsegment 50, zunächst der Rotation des Mitnehmers 56a der Spindel 56 bis zu einer Endstellung des Zahnsegmentes 50. Dem nachfolgend entfernt sich der Mitnehmer 56a von dem Anschlag 58a. Die Mutter 58 bewegt sich hierbei entsprechend ihrer Verbindung mit einem Außengewinde der Spindel 56 von dem Mitnehmer 56a weg.

Erfolgt anschließend eine Verschiebung des Fahrzeugsitzes 1 zurück in Richtung der Memory-Position, wird das dritte Zahnrad 83 in umgekehrter Drehrichtung angetrieben und die Mutter 58 schraubt sich wieder über das Außengewinde der Spindel 56 in Richtung des Mitnehmers 56a. Gelangt die Mutter 58 mit dem Anschlag 58a wieder kurz vor Erreichen der Memory-Position, insbesondere entsprechend der letzten 60° bis 90°-Drehung der Spindel 56, in Kontakt mit dem Mitnehmer 56a, wird die Mutter 58 sowie das Zahnsegment 50 von der Spindel 56 in eine gleichgerichtete Rotationsbewegung gezwungen, welche die Zahnstange 60 wieder in Richtung des Steuerhebels 40 bewegt.

Die Zahnstange 60 dient einer Bereitstellung einer Easy-Entry-Komfort-Funktion, die mittels dem Steuerhebel 40 freigebar ist. Der Bowdenzug 64 ist mit einem dem Steuerhebel 40 abgewandten Ende der Zahnstange 60 verbunden. Wird, nach dem Vorklappen der Lehne 204 und einem hierdurch bewirkten Entriegeln der Schienenverriegelung des Längseinstellers 1, der Fahrzeugsitz 200 aus einer Memory-Position in eine Easy-Entry-Stellung verfahren, so wird eine auf die Zahnstange 60 wirkende, von dem Getriebe 80 über die Spindel-Mutter-Anordnung 54 und das Zahnsegment 50 ausgeübte Gegenzugkraft reduziert. Die Gegenzugkraft dient in der Memory-Position zum Ausgleich einer an der Zahnstange 60 mittels des Bowdenzuges 64 angreifenden Schließkraft einer Verriegelung zur Arretierung der vorgeklappten Lehne 204. Durch das reduzieren der Gegenzugkraft mittels der Spindel-Mutter-Anordnung 54 wird die Zahnstange 60 bewegt und betätigt hierbei mittels des Bowdenzugs 64 die Verriegelung zur Arretierung der vorgeklappten Lehne 204. Folglich ist die Lehne 204 hierdurch in der vorgeklappten Stellung arretiert und die Schienenverriegelung des Längseinstellers 1 bleibt ebenfalls weiter über die Betätigung durch den Bowdenzug 8 entriegelt. Der Fahrzeugsitz 200 ist in diesem Zustand parallel zur Längsrichtung x nach vorne frei verschiebbar.

Nimmt der Fahrzeugsitz 200 anschließend wieder die Memory-Position ein, wird die Zahnstange 60 kurz vor Erreichen der Memory-Position abermals von dem Getriebe 80 über die Spindel-Mutter-Anordnung 54 und das Zahnsegment 50 angetrieben, jedoch in entgegengesetzter Richtung als zuvor. Dieser Bewegung der Zahnstange 60 folgend gibt der Bowdenzug 64 die Verriegelung zur Arretierung der vorgeklappten Lehne 204 wieder frei, und die Lehne 204 kann beim Erreichen der Memory-Position wieder aufgerichtet werden, so dass der Fahrzeugsitz 200 wieder die Gebrauchsstellung einnimmt und durch das Aufrichten der Lehne 204 und das entsprechende nachgeben des Bowdenzuges 8 die Schienenverriegelung des Längseinstellers 1 wieder verriegeln kann.

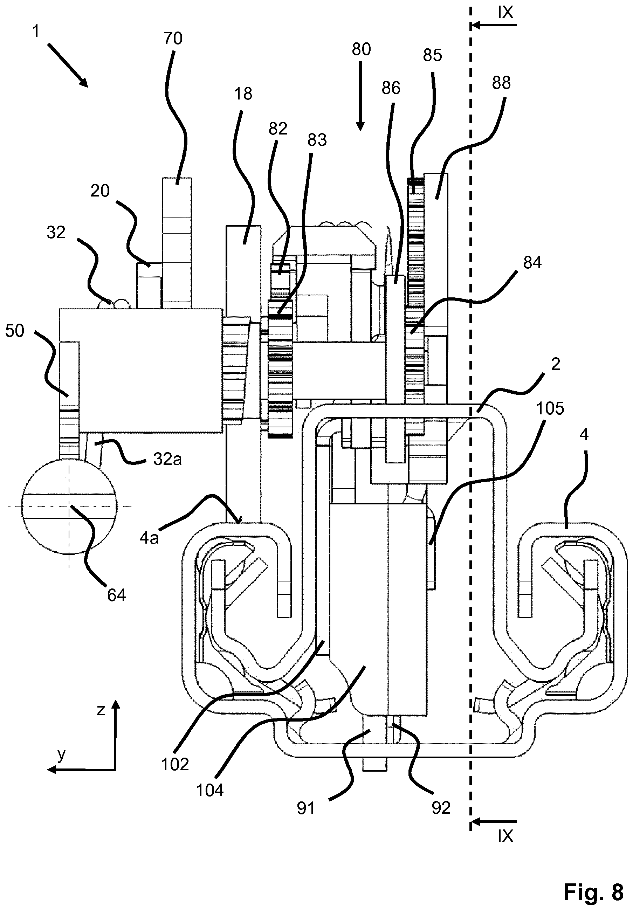

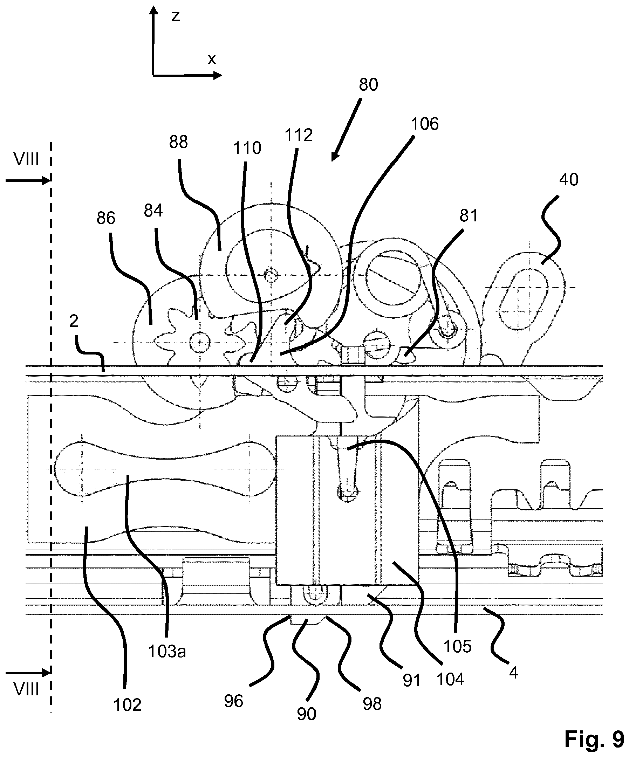

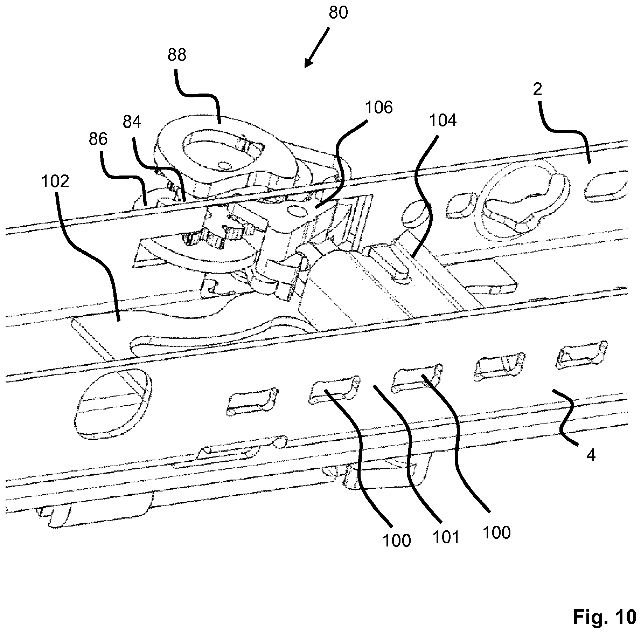

Die Figuren 8 bis 10 zeigen den Längseinsteller 1 in weiteren Blickwinkeln und werden nachfolgend gemeinsam beschrieben. Um, bei einer Längsverschiebung des Fahrzeugsitzes ausgehend von einer Easy-Entry-Stellung in Richtung der Memory-Position, ein Überfahren der Memory-Position zu vermeiden, weist die Memory-Vorrichtung einen ersten Sperrriegel 90 und einem zweiten Sperrriegel 91 auf, welche in Vertikalrichtung z linear verschieblich angeordnet sind. Wenn der Fahrzeugsitz 200 die Memory-Position erreicht, greift wenigstens einer der vorgesehenen Sperrriegel 90, 91 von oben in eine Öffnung 100 eines Lochbildes der Unterschiene 4 ein. Das Lochbild kann hierbei integral in der Unterschiene 4, oder aber in einer in der Unterschiene 4 angeordneten Rastleiste ausgebildet sein. In den Figuren 8 und 9 ist der erste Sperrriegel 90 in eine der Öffnungen 100 der Unterschiene 4 eingefallen, wobei der erste Sperrriegel 90 in einer maximalen Eingriffstiefe mittels des Nocken 92 des ersten Sperrriegels 90 begrenzt ist. Der zweite Sperrriegel 91 liegt währenddessen an einem in einem Bereich zwischen zwei benachbarten Öffnungen 100 der Unterschiene 4 gebildeten Steg 101 auf. Dadurch, dass zwei Sperrriegel 90, 91 vorgesehen sind, welche abwechselnd in eine der Mehrzahl an Öffnungen 100 eingreifen, lässt sich in Verbindung mit den vorgegebenen Abständen der Mehrzahl an Öffnungen 100 des Lochbildes der Unterschiene 4 ein erhöhtes Inkrement der einrastbaren Positionen erzielen. Die Sperrriegel 90, 91 weisen an ihrem den Öffnungen 100 der Unterschiene 4 zugewandten Endabschnitten jeweils eine Sperrkontur 96 und eine dieser gegenüberliegenden und nach vorne ausgerichteten Anlaufkontur 98 auf. Die Sperrriegel 90, 91 sind mittels eines aus darstellungstechnischen Gründen nicht gezeigten Federelements in Richtung einer in eine Öffnung 100 eingreifende Stellung vorgespannt. Die Sperrriegel 90, 91 sind vorliegend innerhalb eines Riegelgehäuses 104 angeordnet und mittels eines von oben eingeführten Führungselements 105 in Vertikalrichtung z verschieblich geführt. Das Riegelgehäuse 104 ist an einem Adapterblech 102 befestigt, welches wiederum an der Oberschiene 2 fixiert ist. Das Adapterblech 102 weist eine im Wesentlichen in Längsrichtung x orientierte erste Ausnehmung 103a auf.

Während einer Veränderung der Sitzlängsposition aus der Memory-Position heraus und anschließend wieder in diese hinein, wird das Reibrad 18 durch die Relativbewegung über die Kontaktfläche 4a der Unterschiene 4 angetrieben. Die Rotation des Reibrades 18 um die Drehachse 18a wird das Getriebe 80 angetrieben. Das Getriebe 80 bildet das Wegmesssystem und steuert die Sperrriegel 90, 91 an.
In der Darstellung von Fig. 9 ist weiter zu erkennen, dass der erste Nocken 110 in eine Ausnehmung der ersten Konturscheibe 86 und der zweite Nocken 112 in eine Ausnehmung der zweiten Konturscheibe 88 eingelassen sind. In diesem Grundzustand weisen die erste Konturscheibe 86 und auch die zweite Konturscheibe 88 einen übereinstimmenden Drehwinkel von 0° auf. Der Entriegelungshebel 106 übt keine Kraft entgegen einer auf die Sperrriegel 90, 91 wirkenden Federkraft aus. Dies entspricht dem Grundzustand in der gespeicherten Sitzlängsposition, bzw. der Memory-Position ohne eine erfolgte Längsverschiebung.
Bei einer nun beginnenden Längsverschiebung der Oberschiene 2 relativ zur Unterschiene 4 aus der Memory-Position in Richtung der Easy-Entry-Stellung und entsprechend des Reibrades 18 relativ zur Kontaktfläche 4a wird die Längsverschiebung in eine Drehbewegung aller Zahnräder 81 bis 85 des Getriebes 80 umgesetzt. Hierbei treibt die erste Konturscheibe 86 den ersten Nocken 110 in einer im Wesentlichen nach unten gerichteten Bewegung aus der Ausnehmung der ersten Konturscheibe 86 heraus. Dies bewirkt eine Schwenkbewegung des Entriegelungshebels 106 um die Drehachse 106a. Die Drehung der ersten Konturscheibe 86 erfolgt hierbei, entsprechend der Untersetzung des Getriebes 80, mit einer höheren Winkelgeschwindigkeit als die Drehung der zweiten Konturscheibe 88.
Sind der erste Nocken 110 und der zweite Nocken 112 vollständig aus den jeweiligen Ausnehmungen der ersten Konturscheibe 86 und der zweiten Konturscheibe 88 ausgetreten, hat der Entriegelungshebel 106 die Sperrriegel 90, 91 vollständig in die entriegelte Stellung bewegt. Hierbei wird der Entriegelungshebel 106 zunächst mittels der ersten und zweiten Konturscheibe 86, 88 und des entsprechenden ersten und zweiten Nockens 110, 112 in dieser entriegelnden Stellung gehalten. Erfolgt eine weitere Längsverschiebung und eine entsprechende weitere Rotation der ersten Konturscheibe 86, verliert der erste Nocken 110 im Bereich der Ausnehmung der ersten Konturscheibe 86 den Kontakt zur ersten Konturscheibe 86 und der Entriegelungshebel 106 wird lediglich über seinen Kontakt mittels des zweiten Nockens 112 zur zweiten Konturscheibe 88 in der entriegelnden Stellung gehalten.

Erfolgt anschließend eine Längsverschiebung des Fahrzeugsitzes 200 zurück in Richtung der gespeicherten Sitzlängsposition, sind die zuvor beschriebenen Zustände und Bewegungsabfolgen in umgekehrter Reihenfolge zu betrachten. Unmittelbar bei Erreichen der Memory-Position sind die erste Konturscheibe 86 und die zweite Konturscheibe 88 mit ihren jeweiligen Ausnehmungen wieder derart zueinander ausgerichtet, dass der erste Nocken 110 und der zweite Nocken 112 des Entriegelungshebels 106 in die jeweiligen Ausnehmungen der Konturscheiben 86, 88 eingreifen können, wodurch der um die Drehachse 106a verschwenkbare Entriegelungshebel 106 freigegeben wird. Hierdurch werden die Sperrriegel 90, 91 durch die auf sie wirkende Federkraft in Richtung der Unterschiene 4 bewegt und wenigstens einer der Sperrriegel 90, 91 in die der Memory-Position entsprechende Öffnung 100 der Unterschiene 4 getrieben, so dass die Oberschiene 2 nicht weiter relativ zur Unterschiene 4 verschoben werden kann. Hierbei bewegen die Sperrriegel 90, 91 den Entriegelungshebel 106 um die Drehachse 106a mit, dass der erste Nocken 110 in die Ausnehmung der ersten Konturscheibe 86 und entsprechend der zweite Nocken 112 in die Ausnehmung der zweiten Konturscheibe 88 eintreten.

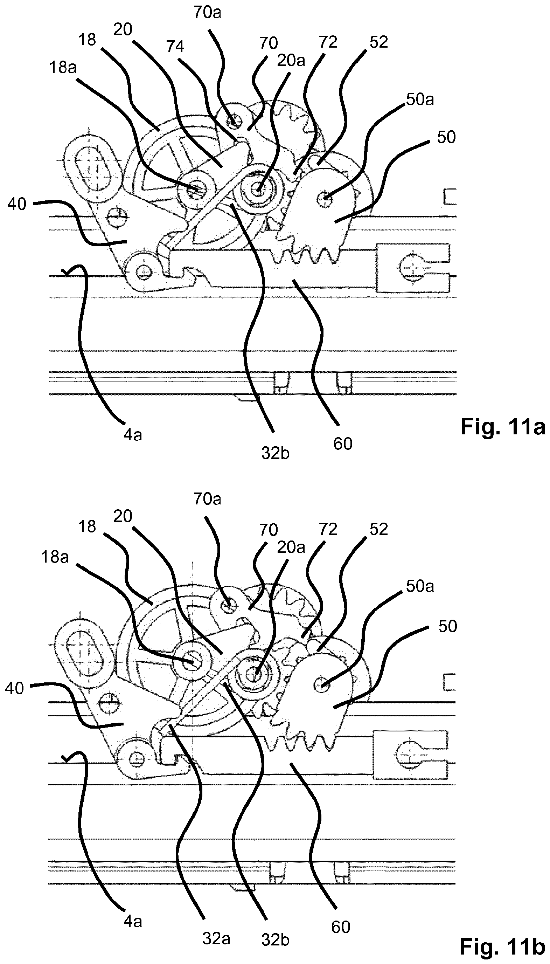

Fig. 11a zeigt das Getriebe 80 des Längseinstellers 1 von Fig. 5 in einem Zustand mit teilweise angehobenem Reibrad, und Fig. 11b in einem Zustand mit vollständig angehobenem Reibrad. Ausgehend von dem Längseinsteller 1 im Grundzustand wird ein Anheben des Reibrades 18 beispielsweise durch ein manuelles Anheben des Betätigungshebels 5a durch den Insassen herbeigeführt. Wenn das Reibrad 18 von der Kontaktfläche 4a abgehoben und entsprechend um die Drehachse 20a der Reibradschwinge 20 verschwenkt wird, bewirkt die Nase 22 der Reibradschwinge 20 ein Verschwenken des Rückstellhebels 70 um die Drehachse 70a. In der Grundstellung, in welcher das Zahnsegment 50 in der dargestellten Stellung gedreht ist, und der Haken 62 der Zahnstange 60 mit der Klinke 46 in Eingriff ist, verschwenkt der Nocken 72 des Rückstellhebels 70 an dem Nocken 52 des Zahnsegments 50 vorbei. Weiter erkennbar ist, dass bei dem Anheben des Reibrades 18, das zweite Federende 32b mit dem Reibrad 18 zusammen relativ zur Drehachse 20a der Reibradschwinge 20 verschwenkt wird, wodurch sich die Anpresskraft, mit der die Schenkelfeder 32 das Reibrad 18 beaufschlagt, entsprechend erhöht.

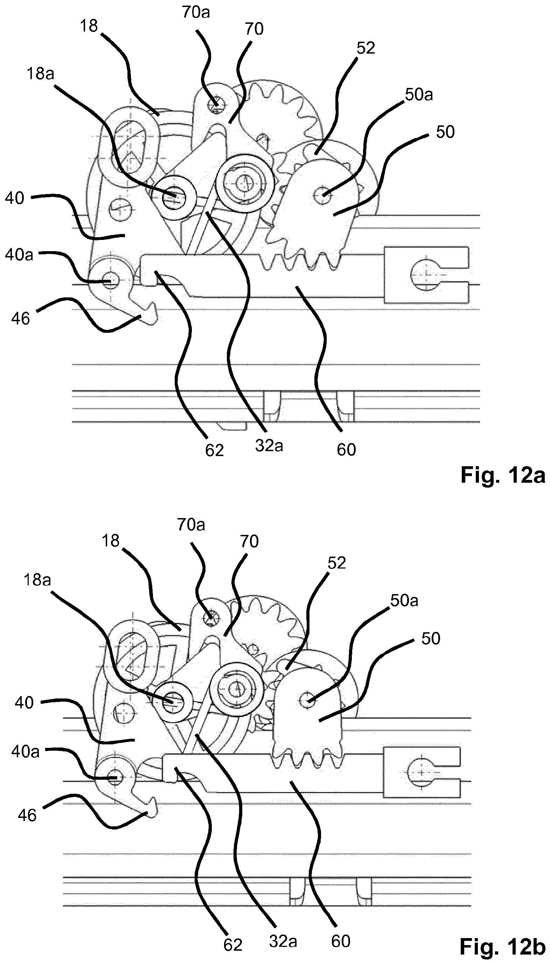

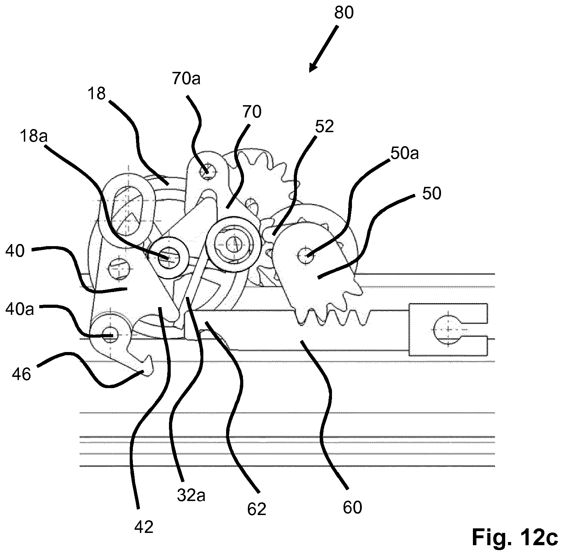

Fig. 12a zeigt das Getriebe 80 des Längseinstellers 1 von Fig. 5 in einem Zustand mit vorgeklappter Lehne 204, jedoch noch in der Memory-Position. Fig. 12b zeigt das Getriebe 80 des Längseinstellers 1 in einem Zustand im unmittelbaren Bereich einer Memory-Position und Fig. 12c in einem Zustand bei weiter in Längsrichtung verschobenem Fahrzeugsitz 200. Die Abfolge der Figuren 12a bis 12c zeigt ein Überführen des Fahrzeugsitzes 200 in eine Easy-Entry-Stellung.

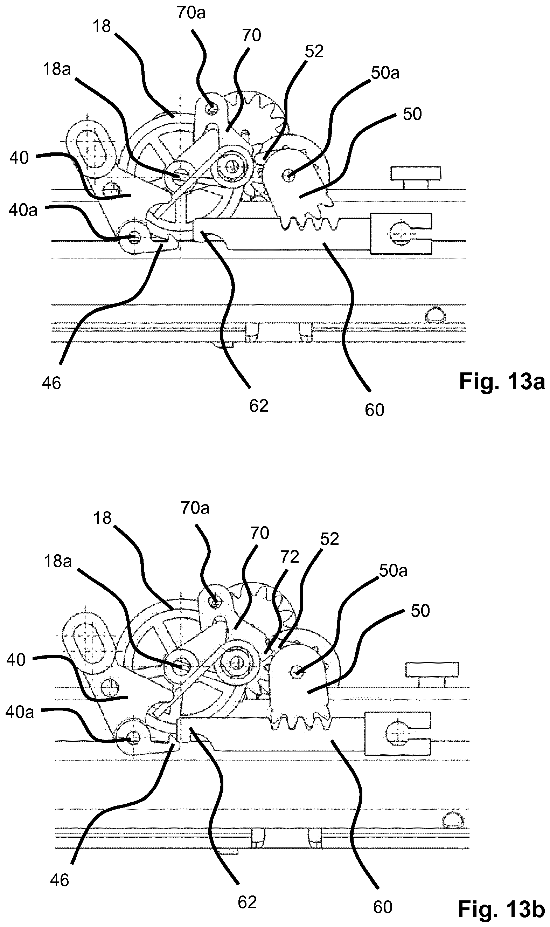

Fig. 13a zeigt das Getriebe 80 des Längseinstellers 1 von Fig. 12c in einem gegenüber Fig. 12c veränderten Zustand, welcher erreicht wird, wenn die Lehne 204 vor Erreichen der Memory-Position aufgerichtet wird. Demnach ist der einzige Unterschied der beiden Zeichnungen, dass der Steuerhebel 40 in seine der aufgerichteten Lehne 204 entsprechende Grundstellung zurück geschwenkt ist. Dies kann erforderlich sein, wenn im Fußraum hinter dem Fahrzeugsitz 200 ein sperriges Transportgut, beispielsweise eine Kiste, abgestellt wird und der Fahrzeugsitz 200 aus der Easy-Entry-Position nicht mehr vollständig in die Memory-Position zurück verfahren werden kann. In diesem Fall ist es erforderlich, dass die Möglichkeit besteht, die Lehne 204 in einer neuen Sitzlängsposition aufzurichten und den Fahrzeugsitz 200 in dieser Sitzlängsposition zu verriegeln.

In diesem Falle ist es ferner vorgesehen, dass die Memory-Vorrichtung an der neuen Sitzlängsposition wieder in den Grundzustand zurückgesetzt werden kann. Hierzu werden die in den Figuren 13a bis 13d gezeigten Zustände der Reihe nach durchlaufen.

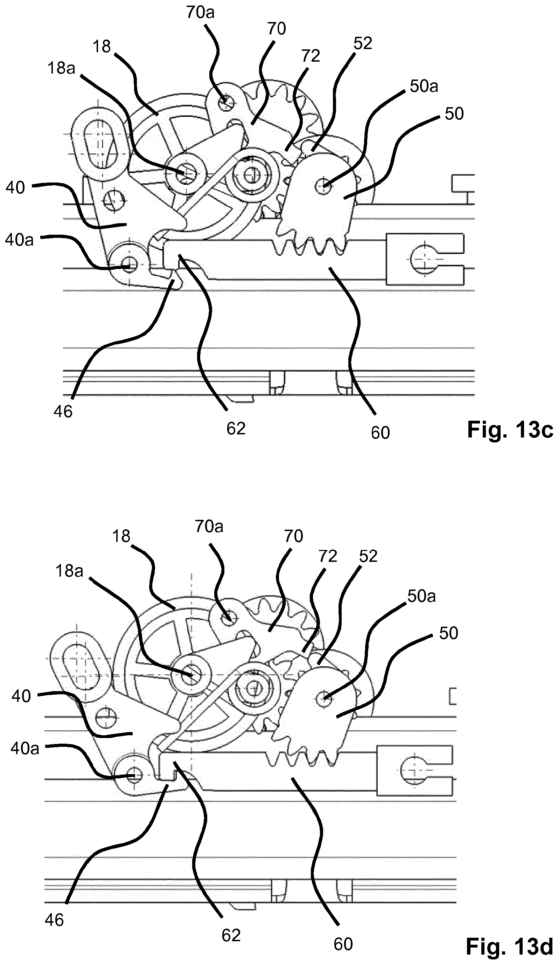

Zunächst wird gemäß dem Zustand von Fig. 13b ein Anheben des Reibrades 18, durch eine manuelle Betätigung des Betätigungshebels 5a, eingeleitet. Wenn das Reibrad 18 von der Kontaktfläche 4a abgehoben und entsprechend um die Drehachse 20a der Reibradschwinge 20 verschwenkt wird, bewirkt die Nase 22 der Reibradschwinge 20 ein Verschwenken des Rückstellhebels 70 um die Drehachse 70a. Da sich der Fahrzeugsitz 200 nicht in der zuvor gespeicherten Sitzlängsposition befindet und das Zahnsegment 50 gegenüber seiner Grundstellung um die Drehachse 50a gedreht ist, gelangt der Nocken 72 des Rückstellhebels 70 mit dem Nocken 52 des Zahnsegments 50 in Kontakt und beginnt diesen zusammen mit dem Zahnsegment 50 um die Drehachse 50a zu drehen. Diese Drehbewegung ist in den Figuren 13c bis 13d weiter erkennbar. Hierbei bewegt das Zahnsegment 50 entsprechend seiner Drehbewegung die Zahnstange 60 in Richtung des Steuerhebels 40. Durch das Abheben des Reibrades 18 von der Kontaktfläche 4a wird das Getriebe 80, sowie auch die drehfest mit dem dritten Zahnrad 83 verbundene Gewindespindel 56, von der Resetfeder angetrieben in einen Grundzustand zurückgesetzt. Durch eine hierbei bewirkte Drehung der Gewindespindel 56 schraubt sich die Mutter 58 weiter auf die Gewindespindel 56 auf, bis der Mitnehmer 56a und der Anschlag 58a ebenfalls dem Grundzustand entsprechend aneinander anliegen. Wenn der Haken 62 der Zahnstange 60 währenddessen, wie in Fig. 13b gezeigt, auf eine Anlaufschräge der Klinke 46 trifft, wird die Klinke 46, wie in Fig. 13c gezeigt, geringfügig um ihre Drehachse 40a verdreht, ohne den restlichen Steuerhebel 40 mitzudrehen, so dass der Haken 62 der Zahnstange 60 und die Klinke 46, wie in Fig. 13d gezeigt, einander hintergreifen können. Der Steuerhebel 40 ist hierbei durch das zweite Federende 32b der Schenkelfeder 32 in Richtung seiner Grundstellung angetrieben.

Die gemäß den Figuren 11a, 11b sowie 13a bis 13d dargestellten Funktionsabläufe sind derart ausgestaltet, dass die beschriebenen Funktionen eines Resets, sprich eines Zurücksetzens in einen vorherigen oder einen neuen Grundzustand, durch ein manuelles Betätigen mittels des Betätigungshebels 5a vollständig durchlaufen und abgeschlossen wird, bevor, hierdurch ebenfalls ausgelöst, die Verriegelung des Längseinstellers 1 entriegelt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, solange die resultierenden Gegenstände dem Umfang entsprechen, der durch die Ansprüche definiert ist. Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, solange die resultierenden Gegenstände dem Umfang entsprechen, der durch die Ansprüche definiert ist. In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Längseinsteller
- 2: Oberschiene
- 4: Unterschiene
- 4a: Kontaktfläche (der Unterschiene)
- 5: Handgriff
- 5a: Betätigungshebel
- 6: Übertragungsstange
- 6a: Drehachse (der Übertragungsstange)
- 8: Bowdenzug
- 8a: Bowdenzugende
- 8b: Bowdenzugnippel
- 10: Seilrolle
- 10a: Drehachse (der Seilrolle)
- 11: Hebelarm (der Seilrolle)
- 12: Resethebel
- 12a: Drehachse (des Resethebels)
- 14: Koppel
- 16: Achsträgerelement
- 16a: Drehachse (des Achsträgerelements)
- 18: Reibrad
- 18a: Drehachse (des Reibrades)
- 20: Reibradschwinge
- 20a: Drehachse (der Reibradschwinge)
- 22: Nase (der Reibradschwinge)
- 30: Getriebegehäuse
- 32: Federelement / Schenkelfeder
- 32a: erstes Federende
- 32b: zweites Federende
- 40: Steuerhebel
- 40a: Drehachse (des Steuerhebels)
- 42: Nase (des Steuerhebels)
- 44: Langloch (des Steuerhebels)
- 46: Klinke (des Steuerhebels)
- 50: Zahnsegment
- 50a: Drehachse (des Zahnsegments)
- 52: Nocken (des Zahnsegments)
- 54: Spindel-Mutter-Anordnung
- 56: Gewindespindel
- 56a: Mitnehmer
- 58: Mutter
- 58a: Anschlag
- 60: Zahnstange
- 62: Haken (der Zahnstange)
- 64: weiterer Bowdenzug
- 70: Rückstellhebel
- 70a: Drehachse (des Rückstellhebels)
- 72: Nocken (des Rückstellhebels)
- 74: Langloch (des Rückstellhebels)
- 80: Getriebe
- 81: erstes Zahnrad
- 82: zweites Zahnrad
- 83: drittes Zahnrad
- 84: viertes Zahnrad
- 85: fünftes Zahnrad
- 86: erste Konturscheibe
- 88: zweite Konturscheibe
- 88a: Drehachse (der zweiten Konturscheibe)
- 90: erster Sperrriegel
- 91: zweiter Sperrriegel
- 92: Nocken (des Sperrriegels)
- 96: Sperrkontur (des Sperrriegels)
- 98: Anlaufkontur (des Sperrriegels)
- 100: Öffnung (der Unterschiene)
- 101: Steg (der Unterschiene)
- 102: Adapterblech
- 103a: Ausnehmung (des Adapterblechs)
- 104: Riegelgehäuse
- 105: Führungselement
- 106: Entriegelungshebel
- 106a: Drehachse (des Entriegelungshebels)
- 108: Abschnitt (des Entriegelungshebels)
- 110: erster Nocken (des Entriegelungshebels)
- 112: zweiter Nocken (des Entriegelungshebels)
- 120: Entsperrhebel
- 120a: Drehachse (des Entsperrhebels)
- 122: Entsperrfeder
- 124: Zusatzschwinge
- 200: Fahrzeugsitz
- 202: Sitzteil
- 204: Lehne

- x: Längsrichtung
- y: Querrichtung
- z: Vertikalrichtung

## Patentansprüche

1. Längseinsteller (1) für einen ein Sitzteil (202) und eine Lehne (204) aufweisenden Fahrzeugsitz (200), insbesondere einen Kraftfahrzeugsitz, wobei der Längseinsteller (1) eine erste Sitzschiene (2) und eine zweite Sitzschiene (4) aufweist, wobei die erste Sitzschiene (2) relativ zur zweiten Sitzschiene (4) in einer Längsrichtung (x) verschiebbar ist, wobei eine der ersten Sitzschiene (2) zugeordnete und mit der zweiten Sitzschiene (4) zusammenwirkende Memory-Vorrichtung vorgesehen ist, welche dazu eingerichtet ist, eine Sitzlängsposition des Fahrzeugsitzes (200) zu speichern, die durch eine Längsverschiebung des Fahrzeugsitzes (200) verlassbar und wieder einnehmbar ist, wobei die Memory-Vorrichtung eine Relativbewegung zwischen der ersten Sitzschiene (2) und der zweiten Sitzschiene (4) mittels eines Reibrades (18) erfasst, welches hierzu eine relativ zur Memory-Vorrichtung bewegte Kontaktfläche (4a) kontaktiert und abfährt, wobei ein Betätigungshebel (5a) vorgesehen ist, mittels welchem eine zwischen der ersten Sitzschiene (2) und der zweiten Sitzschiene (4) wirkende Schienenverriegelung entriegelbar ist, wobei der Betätigungshebel (5a) mittels eines Handgriffs (5) betätigbar ist, wobei der Betätigungshebel (5a) an eine Neigung der Lehne (204) des Fahrzeugsitzes (200) koppelbar ist und ein Vorklappen der Lehne (204) den Betätigungshebel (5a) betätigt, wobei der Betätigungshebel (5a) auf einen um eine Drehachse (12a) schwenkbaren Resethebel (12) wirkt, mittels welchem das Reibrad (18) von der Kontaktfläche (4a) abhebbar ist, wodurch die erfasste Relativbewegung zurücksetzbar ist, insbesondere wodurch auch eine Sitzlängsposition speicherbar ist,
**dadurch gekennzeichnet,**
**dass** eine Getriebeanordnung (14, 16) an eine Neigung der Lehne (204) koppelbar ist und ein Vorklappen der Lehne (204) die Drehachse (12a) des Resethebels (12) verlagert, wodurch ein Abheben des Reibrades (18) von der Kontaktfläche (4a) mittels des Resethebels (12) verhindert ist, wenn der Betätigungshebel (5a) auf den Resethebel (12) wirkt.

2. Längseinsteller (1) gemäß Anspruch 1, wobei eine Resetfeder wenigsten mittelbar auf das Reibrad (18) wirkt und das Reibrad (18) zurücksetzt, wenn das Reibrad (18) von der Kontaktfläche (4a) abgehoben ist.

3. Längseinsteller (1) gemäß Anspruch 2, wobei die Resetfeder in Form einer Spiralfeder ausgestaltet ist.

4. Längseinsteller (1) gemäß einem der Ansprüche 2 oder 3, wobei die Resetfeder sich an einem gehäusefesten Abschnitt abstützt.

5. Längseinsteller (1) gemäß einem der Ansprüche 2 bis 4, wobei die Resetfeder durch ein Verschieben der Oberschiene (2) von der Drehung des Reibrades (18) vorspannbar ist.

6. Längseinsteller (1) gemäß einem der Ansprüche 1 bis 5, wobei das Reibrad (18) auf einer Reibradschwinge (20) gelagert ist.

7. Längseinsteller (1) gemäß einem der Ansprüche 1 bis 6, wobei das Reibrad (18) mittels eines Federelementes (32) mit einer Anpresskraft in Richtung der Kontaktfläche (4a) beaufschlagt ist.

8. Längseinsteller (1) gemäß einem der Ansprüche 1 bis 7, wobei die Memory-Vorrichtung bei einem Wiedereinnehmen der gespeicherten Sitzlängsposition einen Sperrriegel (90) betätigt, welcher in einer Blockierstellung ein Verschieben der ersten Sitzschiene (2) relativ zur zweiten Sitzschiene (4) über die gespeicherte Sitzlängsposition hinaus verhindert.

9. Längseinsteller (1) gemäß Anspruch 8, wobei der Sperrriegel (90) parallel zu einer Vertikalrichtung (z) beweglich geführt ist.

10. Längseinsteller (1) gemäß einem der Ansprüche 8 oder 9, wobei der Sperrriegel (90) in der Blockierstellung in eine Öffnung (100) der zweiten Sitzschiene (4) eingreift.

11. Längseinsteller (1) gemäß einem der Ansprüche 8 bis 10, wobei der Sperrriegel (90) innerhalb eines Riegelgehäuses (104) geführt ist und das Riegelgehäuse (104) mittels eines Adapterblechs (102) mit der ersten Sitzschiene (2) verbunden ist.

12. Fahrzeugsitz (200) aufweisend ein Sitzteil (202), eine Lehne (204) und einen mit dem Sitzteil (202) verbundenen Längseinsteller (1) gemäß einem der vorhergehenden Ansprüche.

## Claims

1. Longitudinal adjuster (1) for a vehicle seat (200), in particular a motor vehicle seat, having a seat part (202) and a backrest (204), wherein the longitudinal adjuster (1) has a first seat rail (2) and a second seat rail (4), wherein the first seat rail (2) is displaceable relative to the second seat rail (4) in a longitudinal direction (x), wherein a memory device assigned to the first seat rail (2) and interacting with the second seat rail (4) is provided which is designed to store a seat longitudinal position of the vehicle seat (200) that can be left and assumed again by a longitudinal displacement of the vehicle seat (200), wherein the memory device detects a relative movement between the first seat rail (2) and the second seat rail (4) by means of a friction wheel (18) which for this purpose contacts and moves along a contact surface (4a) moved relative to the memory device, wherein an actuating lever (5a) is provided by means of which a rail locking mechanism acting between the first seat rail (2) and the second seat rail (4) can be unlocked, wherein the actuating lever (5a) can be actuated by means of a handle (5), wherein the actuating lever (5a) can be coupled to an inclination of the backrest (204) of the vehicle seat (200) and a folding-forward of the backrest (204) actuates the actuating lever (5a), wherein the actuating lever (5a) acts on a reset lever (12) which is pivotable about an axis of rotation (12a) and by means of which the friction wheel (18) can be lifted from the contact surface (4a), whereby the detected relative movement can be reset, in particular whereby a seat longitudinal position can also be stored,
**characterized**
**in that** a mechanism arrangement (14, 16) can be coupled to an inclination of the backrest (204) and a folding-forward of the backrest (204) displaces the axis of rotation (12a) of the reset lever (12), whereby a lifting of the friction wheel (18) from the contact surface (4a) is prevented by means of the reset lever (12) if the actuating lever (5a) acts on the reset lever (12).

2. Longitudinal adjuster (1) according to Claim 1, wherein a reset spring acts at least indirectly on the friction wheel (18) and resets the friction wheel (18) if the friction wheel (18) is lifted from the contact surface (4a).

3. Longitudinal adjuster (1) according to Claim 2, wherein the reset spring is designed in the form of a helical spring.

4. Longitudinal adjuster (1) according to either of Claims 2 and 3, wherein the reset spring is supported on a housing-mounted portion.

5. Longitudinal adjuster (1) according to one of Claims 2 to 4, wherein the reset spring can be pretensioned by the rotation of the friction wheel (18) by means of a displacement of the upper rail (2).

6. Longitudinal adjuster (1) according to one of Claims 1 to 5, wherein the friction wheel (18) is mounted on a friction wheel rocker (20).

7. Longitudinal adjuster (1) according to one of Claims 1 to 6, wherein the friction wheel (18) is subjected by means of a spring element (32) to a pressing force in the direction of the contact surface (4a).

8. Longitudinal adjuster (1) according to one of Claims 1 to 7, wherein, with the stored seat longitudinal position being assumed again, the memory device actuates a blocking bolt (90) which, in a blocking position, prevents a displacement of the first seat rail (2) relative to the second seat rail (4) beyond the stored seat longitudinal position.

9. Longitudinal adjuster (1) according to Claim 8, wherein the blocking bolt (90) is guided moveably parallel to a vertical direction (z).

10. Longitudinal adjuster (1) according to either of Claims 8 and 9, wherein, in the blocking position, the blocking bolt (90) engages in an opening (100) in the second seat rail (4).

11. Longitudinal adjuster (1) according to one of Claims 8 to 10, wherein the blocking bolt (90) is guided within a bolt housing (104) and the bolt housing (104) is connected to the first seat rail (2) by means of an adapter plate (102).

12. Vehicle seat (200) having a seat part (202), a backrest (204) and a longitudinal adjuster (1) according to one of the preceding claims that is connected to the seat part (202).

## Revendications

1. Dispositif de réglage longitudinal (1) pour un siège de véhicule (200) présentant une partie de siège (202) et un dossier (204), en particulier un siège de véhicule automobile, dans lequel le dispositif de réglage longitudinal (1) présente un premier rail de siège (2) et un second rail de siège (4), dans lequel le premier rail de siège (2) est déplaçable par rapport au second rail de siège (4) dans une direction longitudinale (x), dans lequel il est prévu un dispositif de mémoire associé au premier rail de siège (2) et coopérant avec le second rail de siège (4), qui est configuré pour mémoriser une position longitudinale de siège du siège de véhicule (200), qui peut être quittée et de nouveau occupée par un déplacement longitudinal du siège de véhicule (200), dans lequel le dispositif de mémoire détecte un mouvement relatif entre le premier rail de siège (2) et le second rail de siège (4) au moyen d'une roue de friction (18), qui à cet effet contacte et parcourt une face de contact (4a) déplacée par rapport au dispositif de mémoire, dans lequel il est prévu un levier d'actionnement (5a), au moyen duquel un verrouillage de rail opérant entre le premier rail de siège (2) et le second rail de siège (4) peut être déverrouillé, dans lequel le levier d'actionnement (5a) peut être actionné au moyen d'une poignée (5), dans lequel le levier d'actionnement (5a) peut être couplé à une inclinaison du dossier (204) du siège de véhicule (200) et un rabattement vers l'avant du dossier (204) actionne le levier d'actionnement (5a), dans lequel le levier d'actionnement (5a) agit sur un levier de remise à zéro (12) pivotant autour d'un axe de rotation (12a), au moyen duquel la roue de friction (18) peut être soulevée de la face de contact (4a), de sorte que le mouvement relatif détecté puisse être remis à zéro, en particulier de sorte qu'une position longitudinale du siège puisse être également mémorisée,
**caractérisé en ce qu'**un système de transmission (14, 16), peut être couplé à une inclinaison du dossier (204) et un rabattement vers l'avant du dossier (204) déplace l'axe de rotation (12a) du levier de remise à zéro (12) de telle manière qu'un soulèvement de la roue de friction (18) de la face de contact (4a) au moyen du levier de remise à zéro (12) soit empêché lorsque le levier d'actionnement (5a) agit sur le levier de remise à zéro (12).

2. Dispositif de réglage longitudinal (1) selon la revendication 1, dans lequel un ressort de remise à zéro agit au moins indirectement sur la roue de friction (18) et ramène la roue de friction (18) lorsque la roue de friction (18) est soulevée de la surface de contact (4a).

3. Dispositif de réglage longitudinal (1) selon la revendication 2, dans lequel le ressort de remise à zéro est configuré sous la forme d'un ressort spiral.

4. Dispositif de réglage longitudinal (1) selon l'une quelconque des revendications 2 ou 3, dans lequel le ressort de remise à zéro s'appuie sur une partie fixée au boîtier.

5. Dispositif de réglage longitudinal (1) selon l'une quelconque des revendications 2 à 4, dans lequel le ressort de remise à zéro peut être précontraint par un déplacement du rail supérieur (2) par la rotation de la roue de friction (18).

6. Dispositif de réglage longitudinal (1) selon l'une quelconque des revendications 1 à 5, dans lequel la roue de friction (18) est supportée sur un bras oscillant de roue de friction (20).

7. Dispositif de réglage longitudinal (1) selon l'une quelconque des revendications 1 à 6, dans lequel la roue de friction (18) est sollicitée au moyen d'un élément de ressort (32) avec une force de pressage dans la direction de la surface de contact (4a).

8. Dispositif de réglage longitudinal (1) selon l'une quelconque des revendications 1 à 7, dans lequel le dispositif de mémoire, lors de la reprise de la position longitudinale mémorisée du siège, actionne un verrou de blocage (90) qui, dans une position de blocage, empêche un déplacement du premier rail de siège (2) par rapport au deuxième rail de siège (4) au-delà de la position longitudinale mémorisée du siège.

9. Dispositif de réglage longitudinal (1) selon la revendication 8, dans lequel le verrou de blocage (90) est guidé de manière déplaçable parallèlement à une direction verticale (z).

10. Dispositif de réglage longitudinal (1) selon l'une quelconque des revendications 8 ou 9, dans lequel le verrou de blocage (90) s'engage dans la position de blocage dans une ouverture (100) du deuxième rail de siège (4).

11. Dispositif de réglage longitudinal (1) selon l'une quelconque des revendications 8 à 10, dans lequel le verrou de blocage (90) est guidé à l'intérieur d'un boîtier de verrou (104) et le boîtier de verrou (104) est connecté au moyen d'une tôle d'adaptateur (102) au premier rail de siège (2).

12. Siège de véhicule (200) présentant une partie de siège (202), un dossier (204) et un dispositif de réglage longitudinal (1) selon l'une quelconque des revendications précédentes, relié à la partie de siège (202) .
